# EUROPÄISCHE PATENTSCHRIFT

(11) **EP 0 786 430 B1**
(45) Veröffentlichungstag und Bekanntmachung des Hinweises auf die Patenterteilung: **25.10.2000**
(21) Anmeldenummer: 97100946.9
(22) Anmeldetag: 22.01.1997
(51) Int. Cl.: B66C 9/14, B66C 9/08

(54) **Laufradblock**
Wheel unit
Bloc de roue

(30) Priorität: 26.01.1996 DE 29601339 U
(43) Veröffentlichungstag der Anmeldung: 30.07.1997
(73) Patentinhaber: Böttcher, Manfred, 22397 Hamburg (DE)
(72) Erfinder: Böttcher, Manfred, 22397 Hamburg (DE)
(74) Vertreter: Biehl, Christian, Dipl.-Phys.

(56) Entgegenhaltungen:
- EP-A- 0 582 563
- DE-A- 1 938 125
- DE-A- 2 025 869
- DE-A- 2 319 187
- DE-A- 2 521 540
- DE-A- 3 134 750
- DE-A- 3 817 537
- DE-U- 9 210 797
- FR-A- 2 419 249

## Beschreibung

Die Erfindung betrifft einen Laufradblock mit einem nach unten offenen, aus zwei zusammengesetzten Hälften gebildeten Lagergehäuse, einer in Lagern, die in die das Lagergehäuse bildenden Hälften eingepreßten Lageraufnahmen eingebracht sind, geführten Welle und einem auf der Welle aufsitzendem Laufrad. Ein solcher Laufradblock ist aus der DE 31 34 750 C1 bekannt.

Bei dem bekannten Laufradblock sind ein gesonderter Getriebekasten und ein gesondertes Motorgehäuse vorgesehen. Dies macht den Gesamtaufbau aufwendig und wenig kompakt.

Der Erfindung liegt die Aufgabe zugrunde, einen Laufradblock zu schaffen, der bei einem kompakteren Aufbau kostengünstiger hergestellt werden kann. Sowohl Geringes Eigengewicht wie sicherer Zusammenhalt sollen gegeben sein.

Erfindungsgemäß wird diese Aufgabe gelöst durch ein an die eine der das Lagergehäuse bildenden Hälften angesetztes, einen konzentrisch zu dem Laufrad ausgerichteten Asynchron-Elektromotor aufnehmendes Motorgehäuse, wobei die Welle durch den Rotor des Motors hindurchgeführt und mit diesem fest verbunden ist. Die Unteransprüche geben vorteilhafte Ausführungsformen der Erfindung wieder.

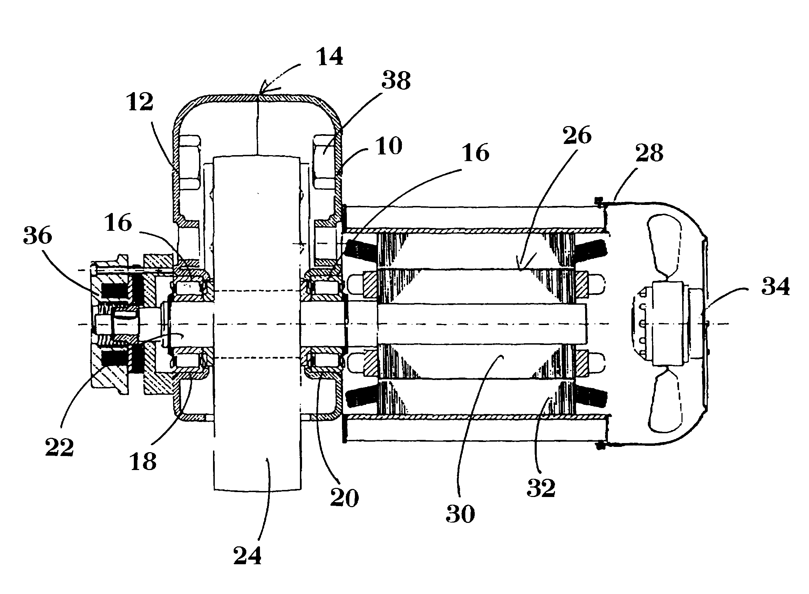

Die Erfindung wird im folgenden anhand einer Zeichnung erläutert.
Dabei zeigt die einzige Figur eine Querschnittsansicht durch einen solchen Laufradblock.

Der Laufradblock besteht wie dargestellt aus einem nach unten offenen und nach oben verschlossenen Lagergehäuse 14, das durch zwei zusammengesetzte Hälften 10, 12 gebildet ist. Die Hälften 10, 12, bilden in diese eingepreßt Lageraufnahmen 18, 20 aus, die zur Aufnahme einer Welle 22 dienende Lager 16 aufnehmen. Auf die Welle 22 ist das Laufrad 24 aufgesetzt.

An die einen der das Lagergehäuse 14 bildenden Hälften 10 ist ein Motorgehäuse 28 angesetzt, das einen konzentrisch zu dem Laufrad 24 angeordneten Asynchron-Elektromotor 26 aufnimmt. Der Stator 32 des Elektromotors 26 ist fest an das Motorgehäuse 28 angesetzt, der Rotor 30 des Motors 26 ist mit der Welle 22, die das Laufrad 24 trägt, unter Verzicht auf ein Getriebe verbunden.

Zur Wartung ist der Laufradblock schnell in seine Komponenten zerlegt, und etwa durch stärkere Beanspruchung belastete Teile können leicht erkennt und gewechselt werden.

Das Motorgehäuse 28 nimmt weiter einen Ventilator 34 auf, der gesondert elektrisch angetrieben wird und für eine Kühlung des Asynchron-Elektromotors 26 sorgt (auf der dem Ventilator abgewandten Seite des Motors 26 sind Luftdurchgangslöcher vorgesehen, die eine Passage von Kühlluft durch die Wickelköpfe des Elektromotors 26 erlaubt).

Auf der dem Motorgehäuse 28 gegenüberliegenden Seite des Lagergehäuses 14 ist eine Bremse 36 angeordnet, die auf ein Ende der Welle 22 wirkt, das durch die andere der das Lagergehäuse 14 bildenden Hälften 12 hindurchgeführt ist.

Das Motorgehäuse 28 ist über - nicht gezeigte - Blankschrauben an dem Lagergehäuse 14 befestigt, das Lagergehäuse 14 wiederum ist mit eingepreßten Muttern 38 versehen, die zur Befestigung des Lagerblocks an der Konstruktion dienen.

## Patentansprüche

1. Laufradblock mit einem nach unten offenen, aus zwei zusammengesetzten Hälften (10, 12) gebildeten Lagergehäuse (14), einer in Lagern (16), die in die das Lagergehäuse (14) bildenden Hälften (10, 12) eingepreßten Lageraufnahmen (18, 20) eingebracht sind, geführten Welle (22) und einem auf der Welle (22) aufsitzenden Laufrad (24),
gekennzeichnet durch
ein an die eine der das Lagergehäuse (14) bildenden Hälften (10) angesetztes, einen konzentrisch zu dem Laufrad (24) ausgerichten Asynchron-Elektromotor (26) aufnehmendes Motorgehäuse (28), wobei die Welle (22) durch den Rotor (30) des Motors (26) hindurch geführt und mit diesem fest verbunden ist.

2. Laufradblock nach Anspruch 1, gekennzeichnet durch einen in dem hinten offenen Motorgehäuse (28) dem Lagergehäuse (14) gegenüberliegend angeordneten Ventilator (34).

3. Laufradblock nach Anspruch 1 oder 2, gekennzeichnet durch eine an die andere der das Lagergehäuse (14) bildenden Hälften (12) angesetzte, auf die durch die andere Hälfte (12) hindurch geführte Welle (22) wirkende Bremse (36).

## Claims

1. Impeller block with a downwardly open bearing housing (14) formed from two assembled halves (10, 12), a shaft (22) guided in bearings (16), which are introduced into bearing receptacles (18, 20) pressed into the halves (10, 12) forming the bearing housing (14) and an impeller (24) mounted on the shaft (22), characterized by a crankcase (28) attached to one of the halves (10) forming the bearing housing (14) and receiving an asynchronous electric motor (26) oriented concentrically to the impeller (24), the shaft (22) being guided through the rotor (30) of the motor (26) and is connected in fixed manner thereto.

2. Impeller block according to claim 1, characterized by a fan (34) placed in the back-open crankcase (28) facing the bearing housing (14).

3. Impeller block according to claim 1 or 2, characterized by a brake (36) attached to the other of the halves (12) forming the bearing housing (14) and acting on the shaft (22) guided through the other half (12).

## Revendications

1. Bloc de roue comportant un boîtier de palier (14) ouvert vers le bas, formé de deux moitiés (10, 12) assemblées, un arbre (22) guidé dans des paliers (16) qui sont installés dans des logements de palier (18, 20) enfoncés dans les moitiés (10, 12) formant le boîtier de palier (14) et une roue (24) logée sur l'arbre (22),
caractérisé par
un boîtier de moteur (28) assemblé à l'une (10) des moitiés formant le boîtier de palier (14) et logeant un moteur électrique asynchrone (26) orienté concentriquement par rapport à la roue (24), l'arbre (22) étant guidé à travers le rotor (30) du moteur (26) et étant relié fermement à celui-ci.

2. Bloc de roue selon la revendication 1, caractérisé par un ventilateur (34) dans le boîtier de moteur (28) ouvert à l'arrière, à l'opposé du boîtier de palier (14).

3. Bloc de roue selon la revendication 1 ou 2, caractérisé par un frein (36) assemblé à l'autre (12) des moitiés formant le boîtier de palier (14), agissant sur l'arbre (22) guidé à travers l'autre moitié (12).
